(19) **Europäisches Patentamt European Patent Office Office européen des brevets**

(11) **EP 1 267 500 B1**

(12) **FASCICULE DE BREVET EUROPEEN**

(45) Date de publication et mention
de la délivrance du brevet:
**25.11.2009 Bulletin 2009/48**

(51) Int Cl.:
***H04B 7/005*** *(2006.01)*

(21) Numéro de dépôt: **02291322.2**

(22) Date de dépôt: **30.05.2002**

(54) **Procédé d'ajustement de valeur cible de boucle interne de contrôle de puissance dans un système de radiocommunications mobiles**

Verfahren zum Einstellen eines Sollwertes einer Sendeleistungsregelung in innerer Schleife in einem Mobilfunksystem

Method for adjusting a target value of an inner loop power control in a mobile communication system

(84) Etats contractants désignés:
**AT BE CH CY DE DK ES FI FR GB GR IE IT LI LU MC NL PT SE TR**

(30) Priorité: **12.06.2001 FR 0107690**

(43) Date de publication de la demande:
**18.12.2002 Bulletin 2002/51**

(73) Titulaire: **Alcatel Lucent**
**75008 Paris (FR)**

(72) Inventeurs:
• **Agin, Pascal**
**94370 Sucy en Brie (FR)**

• **Billy, Nicolas**
**91120 Palaiseau (FR)**

(74) Mandataire: **El Manouni, Josiane et al**
**Alcatel Lucent**
**Intellectual Property & Standards**
**54 rue La Boétie**
**75008 Paris (FR)**

(56) Documents cités:
**WO-A-00/19636     US-A- 5 333 175**

EP 1 267 500 B1

## Description

La présente invention concerne d'une manière générale les systèmes de radiocommunications mobiles, notamment les systèmes dits à accès multiple à répartition par les codes, ou AMRC, ou encore CDMA (pour "Code Division Multiple Access" en anglais).

La présente invention est notamment applicable aux systèmes dits de troisième génération, tels que notamment le système UMTS (pour "Universal Mobile Télécommunication System").

D'une manière générale, dans ces systèmes, un des objectifs est d'augmenter les performances, c'est-à-dire notamment augmenter la capacité et/ou améliorer la qualité de service.

Une technique couramment utilisée est la technique dite de contrôle de puissance, et notamment la technique de contrôle de puissance dite en boucle fermée (ou "closed loop power control" en anglais).

Le but du contrôle de puissance en boucle fermée est de maintenir, pour chaque liaison entre une station de base et une station mobile, un paramètre représentatif de la qualité de transmission sur cette liaison (tel que par exemple le rapport signal-sur-interférence, ou SIR, pour "Signal-to-Interference Ratio" en anglais) le plus proche possible d'une valeur cible. Par exemple, dans le sens montant (c'est-à-dire de la station mobile vers la station de base), la station de base estime périodiquement le SIR et compare le SIR estimé à la valeur SIR cible (ou "target SIR" en anglais). Si le SIR estimé est inférieur au SIR cible, la station de base demande à la station mobile d'augmenter sa puissance d'émission. Au contraire, si le SIR estimé est supérieur au SIR cible, la station de base demande à la station mobile de diminuer sa puissance d'émission.

La valeur SIR cible est un paramètre important dans ces systèmes. En effet, si le SIR cible est fixé à une valeur supérieure à la valeur nécessaire, le niveau d'interférence dans le système est inutilement accru, et donc les performances du système sont inutilement dégradées; inversement, si le SIR cible est fixé à une valeur inférieure à la valeur nécessaire, la qualité de service est dégradée pour la liaison considérée.

La valeur SIR cible est généralement choisie en fonction de la qualité de service requise, et est couramment ajustée par un algorithme dit de boucle externe (par opposition à l'algorithme précédent dit aussi algorithme de boucle interne). Le principe de l'algorithme de boucle externe est généralement d'estimer régulièrement la qualité de service et de comparer la qualité de service estimée à une qualité de service requise ou qualité de service cible. Si la qualité de service estimée est inférieure à la qualité de service requise, le SIR cible est accru, sinon, le SIR cible est réduit. Au contraire de l'algorithme de boucle interne qui doit être rapide pour suivre d'aussi près que possible les variations du SIR, l'algorithme de boucle externe est habituellement plus lent, car la qualité nécessite d'être moyennée sur une certaine période pour obtenir une estimation fiable.

On rappelle par ailleurs que ces systèmes utilisent généralement des techniques de protection contre les erreurs de transmission, appelées aussi codage de canal (en émission) ou décodage de canal (en réception). Le codage de canal inclut des traitements tels que notamment codage détecteur et/ou correcteur d'erreurs et entrelacement, ces traitements s'appliquant généralement à des séquences de bits appelées aussi par exemple trames, ou blocs, selon le cas.

La qualité de service est généralement représentée par un taux d'erreur estimé en réception après décodage de canal. On utilise ainsi généralement des indicateurs de qualité de service tels que: BER (pour "Bit Error Rate" en anglais), FER (pour "Frame Erasure Rate" en anglais), BLER (pour "Block Erasure Rate" en anglais), ...etc..

On définit par ailleurs le taux d'erreur brut, ou BER brut (ou « raw BER » en anglais), comme le taux d'erreurs avant décodage de canal, obtenu en comparant des données reçues, avant décodage correcteur d'erreurs, avec des données correspondantes obtenues après décodage correcteur d'erreurs, puis re-codées au moyen du même code correcteur d'erreurs qu'en émission.

Un algorithme de boucle externe utilisé habituellement est l'algorithme dit « en dents de scie » (ou « sawtooth » en anglais). Un exemple de tel algorithme est le suivant:

- lorsqu'un bloc est détecté erroné en réception, le SIR cible est augmenté de $\delta_{up}$ dB,
- lorsqu'un bloc est détecté non erroné en réception, le SIR cible est diminué de $\delta_{down}$ dB.

$\delta_{up}$ et $\delta_{down}$ sont deux paramètres de l'algorithme qui vérifient:

$$\delta_{up} * BLER_{target} = \delta_{down} * (1 - BLER_{target})$$

afin que le BLER moyen soit égal au BLER cible (ou $BLER_{target}$).

Les performances obtenues avec un tel algorithme sont relativement bonnes pour un BLER cible d'environ $10^{-2}$ ou un peu moins. Par contre ces performances sont plutôt mauvaises pour des valeurs plus faibles de BLER cible ($10^{-3}$ ou en dessous). Or pour certains services tels que par exemple des services de données en mode circuit, la qualité de service requise correspond habituellement à un BER d'environ $10^{-6}$, ce qui correspond habituellement à un BLER cible compris entre $10^{-5}$ et $10^{-4}$. Ces performances plutôt mauvaises sont essentiellement dues au fait qu'un tel algorithme est basé sur une estimation du BLER, qui ne permet pas alors d'obtenir une indication de qualité de façon suffisamment précise et réactive. En effet, dans un système tel que l'UMTS par exemple, le nombre de blocs par intervalle de temps de transmission, ou TTI (pour "Transmission Time Interval" en anglais), est relativement faible, typiquement un seul bloc par TTI, où TTI peut prendre des valeurs relativement élevées telles que 20, 40 ou 80 ms selon le type de service (pour plus d'informations sur ces aspects de l'UMTS on pourra se reporter par exemple à la spécification 3G TS 25.212 publiée par le 3GPP (« 3rd Génération Partnership Project »).

D'autres exemples d'algorithmes de boucle externe ont été proposés afin d'éviter les inconvénients de l'algorithme "en dents de scie".

Dans le document WO 99/05808, la boucle externe est constituée de deux boucles:

- une première boucle qui, en fonction de l'écart entre un premier indicateur de qualité (en l'occurrence FER) et une valeur cible pour ce premier indicateur de qualité, ajuste une valeur cible pour une deuxième boucle,
- une deuxième boucle qui ajuste la valeur cible de boucle interne, en fonction de l'écart entre un deuxième indicateur de qualité (en l'occurrence SER, pour "Symbol Error Rate" en anglais) et la valeur cible déterminée par la première boucle, un tel ajustement n'étant en outre effectué que si cet écart dépasse un seuil donné.

Le document DE 199 30 747 concerne également une boucle externe formée de deux boucles: une première boucle qui ajuste la valeur cible SIR cible en fonction d'un indicateur de qualité tel que le BER brut, et une deuxième boucle qui ajuste une valeur cible pour cet indicateur de qualité, en fonction d'un taux d'erreur:

Dans le document WO 01/01600, la boucle externe est constituée de deux boucles, procédant, chacune à des ajustements de la valeur cible de boucle interne:

- une première boucle qui procède à des ajustements relativement importants de la valeur cible de boucle interne lorsqu'une trame est détecté mauvaise ou lorsqu'un certain nombre de trames consécutives sont détectées bonnes,
- une deuxième boucle qui, en l'absence d'ajustement par la première boucle, fait en sorte, par des ajustements relativement moins importants, de maintenir à une valeur cible un taux d'erreur appelé taux d'erreur de canal de transmission (obtenu- en comparant le signal obtenu après décodage à un signal obtenu en re-codant le signal obtenu après décodage). Par ailleurs, lorsque la première boucle décide qu'un ajustement de valeur cible de boucle interne est nécessaire, le taux d'erreur de canal de transmission alors obtenu est supposé être une valeur acceptable pour la valeur cible à atteinre par la deuxième boucle.

Dans le document WO01/20808, une boucle, de contrôle (boucle moyenne) est interposée entre une boucle interne et une boule externe, certains indicateurs de qualité sont couplés a la boucle externe et à la boucle moyenne, la boucle externe fournit une valeur cible de qualité à la boucle moyenne, et la boucle moyenne fournit une valeur cible de SIR.

La présente invention notamment pour but d'éviter également les inconvénients de l'algorithme "en dents de scie", mois tout en permettant d'optimiser encore les performance. La présente invention est définie par les caractéristiques de la revendication 1

Un des objets de la présente invention est ainsi un procédé d'ajustement de valeur cible de boucle interne de contrôle de puissance dans un système de radiocommunications mobiles, procédé dans lequel:

- ladite valeur cible de boucle interne est ajustée par une boucle de contrôle dite première boucle externe, opérant sur la base d'un indicateur de qualité dit premier indicateur de qualité et d'une valeur cible pour ce premier indicateur de qualité, dite valeur cible de première boucle externe,
- ladite valeur cible de première boucle externe est ajustée par une boucle de contrôle dite deuxième boucle externe, opérant sur la base d'un indicateur de qualité dit deuxième indicateur de qualité et d'une valeur cible pour ce deuxième indicateur de qualité, dite valeur cible de deuxième boucle externe,
- ledit deuxième indicateur de qualité indique un taux d'erreur, et ladite valeur cible de première boucle externe est ajustée à chaque erreur détectée.

Suivant une autre caractéristique, les informations transmises dans ledit système étant structurées en blocs sur la base desquels est obtenu ledit deuxième indicateur de qualité, ladite valeur cible de première boucle externe est ajustée bloc par bloc.

Suivant une autre caractéristique, la deuxième boucle externe ajuste la valeur cible de première boucle externe selon une première ou une deuxième valeur selon qu'une erreur est ou non détectée.

Suivant une autre caractéristique, lesdites première et deuxième valeurs et la valeur cible de deuxième boucle externe sont reliées entre elles de manière à ce que, en moyenne, le deuxième indicateur de qualité atteigne la valeur cible de deuxième boucle externe.

Suivant une autre caractéristique, ledit premier indicateur de qualité est un indicateur de qualité de transmission.

Suivant une autre caractéristique, ledit premier indicateur de qualité est le BER brut.

Suivant une autre caractéristique, ledit deuxième indicateur de qualité est un indicateur de qualité de service.

Suivant une autre caractéristique, ledit deuxième indicateur de qualité est le BLER.

Un autre objet de la présente invention est un procédé d'ajustement de valeur cible de boucle interne de contrôle de puissance dans un système de radiocommunications mobiles, procédé dans lequel:

- ladite valeur cible de boucle interne est ajustée par une boucle de contrôle dite première boucle externe, opérant sur la base d'un indicateur de qualité dit premier indicateur de qualité et d'une valeur cible pour ce premier indicateur de qualité, dite valeur cible de première boucle externe,
- ladite valeur cible de première boucle externe est ajustée par une boucle de contrôle dite deuxième boucle externe, opérant sur la base d'un indicateur de qualité dit deuxième indicateur de qualité et d'une valeur cible pour ce deuxième indicateur de qualité, dite valeur cible de deuxième boucle externe,
- ladite valeur cible de première boucle externe n'est ajustée que si ladite première boucle externe a déjà convergé.

Un autre objet de la présente invention est un procédé d'ajustement de valeur cible de boucle interne de contrôle de puissance dans un système de radiocommunications mobiles, procédé dans lequel:

- ladite valeur cible de boucle interne est ajustée par une boucle de contrôle dite première boucle externe, opérant sur la base d'un indicateur de qualité dit premier indicateur de qualité et d'une valeur cible pour ce premier indicateur de qualité, dite valeur cible de première boucle externe,
- ladite valeur cible de première boucle externe est ajustée par une boucle de contrôle dite deuxième boucle externe, opérant sur la base d'un indicateur de qualité dit deuxième indicateur de qualité et d'une valeur cible pour ce deuxième indicateur de qualité, dite valeur cible de deuxième boucle externe,
- des valeurs initiales pour ladite valeur cible de boucle interne et ladite valeur cible de première boucle externe sont déterminées de manière à pouvoir être atteintes approximativement simultanément pour une même puissance d'émission.

Suivant une autre caractéristique, ladite valeur initiale de valeur cible de première boucle externe est obtenue par des mesures effectuées pour une valeur prédéterminée de ladite valeur cible de boucle interne.

Suivant une autre caractéristique, ladite valeur prédéterminée de valeur cible de boucle interne est choisie la plus proche possible d'une valeur idéale.

Suivant une autre caractéristique, ladite valeur initiale de valeur cible de première boucle externe est choisie la plus proche possible d'une valeur idéale, et ladite valeur cible de première boucle externe n'est ajustée que si ladite première boucle externe a déjà convergé.

La présente invention a également pour objet :

- une station mobile (notamment UE, pour « User Equipment » dans un système tel que l'UMTS),

- un équipement de réseau de radiocommunications mobiles(notamment un contrôleur de stations de base tel que RNC(« Radio Network Controller ») dans un système tel que l'UMTS, ou encore une station de base telle que Node B dans un système tel que l'UMTS),
- un réseau de radiocommunications mobiles,
- un système de radiocommunications mobiles, tous comportant des moyens pour mettre en oeuvre un procédé suivant l'invention.

D'autres objets et caractéristiques de la présente invention apparaîtront à la lecture de la description suivante d'exemples de réalisation, faite en relation avec les dessins ci-annexés dans lesquels:

- la figure 1 est destinée à illustrer un premier exemple de procédé suivant l'invention,
- la figure 2 est destinée à illustrer un deuxième exemple de procédé suivant l'invention,
- la figure 3 rappelle l'architecture générale d'un système de radiocommunications mobiles, tel que notamment le système UMTS.

On considère un algorithme d'ajustement de valeur cible de boucle interne dans lequel:

- ladite valeur cible de boucle interne est ajustée par une boucle de contrôle dite première boucle externe, opérant sur la base d'un indicateur de qualité dit premier indicateur de qualité et d'une valeur cible pour ce premier indicateur de qualité, dite valeur cible de première boucle externe,
- ladite valeur cible de première boucle externe est ajustée par une boucle de contrôle dite deuxième boucle externe, opérant sur la base d'un indicateur de qualité dit deuxième indicateur de qualité et d'une valeur cible pour ce deuxième indicateur de qualité, dite valeur cible de deuxième boucle externe.

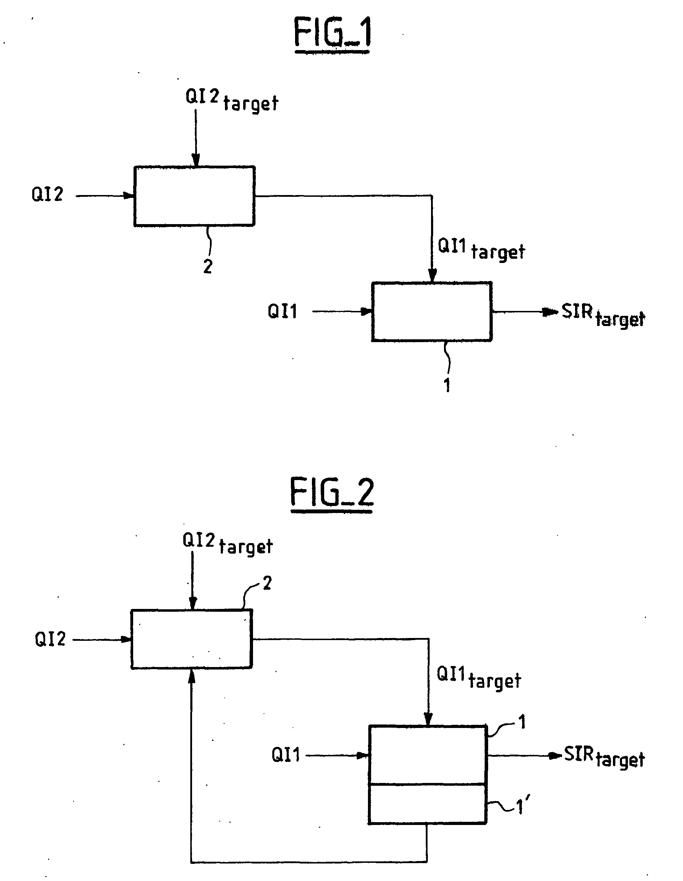

Par exemple, comme illustré sur la figure 1:

- une première boucle externe 1 utilise un premier indicateur de qualité $QI1$ afin de fixer la valeur cible de boucle interne (ou SIR cible, ou $SIR_{target}$):

    plus précisément, si $QI1 < QI1_{target}$ (où $QI1_{target}$ est la valeur cible de première boucle externe), le SIR cible est augmenté de $\delta1_{up}$. Sinon, le SIR cible est diminué de $\delta1_{down}$,

- une deuxième boucle externe 2 utilise un deuxième indicateur de qualité $QI2$ afin de fixer $QI1_{target}$:

    plus précisément, si $QI2 < QI2_{target}$ (où $QI2_{target}$ est la deuxième valeur cible de boucle externe), $QI1_{target}$ est augmenté de $\delta2_{up}$. Sinon, $QI1_{target}$ est diminué de $\delta2_{down}$.

QI1 et QI2 sont deux indicateurs de qualité (tels que BLER, BER, BER brut, ...) qui peuvent être estimés de n'importe quelle manière habituelle pendant l'exécution de l'algorithme.

Par exemple, le BLER peut être estimé en détectant des blocs erronés grâce à un code CRC (pour "Cyclic Redundancy Code" en anglais), car il y a habituellement (notamment dans le cas de l'UMTS) un CRC par bloc.

QI1 et QI2 peuvent être un même indicateur de qualité, même si ce cas n'est pas le plus intéressant en pratique.

$\delta 1_{up}$, $\delta 1_{down}$, $\delta 2_{up}$ et $\delta 2_{down}$ sont des paramètres de cet algorithme. Ils peuvent être positifs ou négatifs avec la contrainte que $\delta i_{up}$ et $\delta i_{down}$ (i=1,2) aient le même signe. On notera que le fait d'avoir des valeurs négatives au lieu de valeurs positives est équivalent à inverser les termes « augmenté » et « diminué » dans l'algorithme.

$QI2_{target}$ représente normalement la qualité de service requise (par exemple, un BLER cible de 0.01 est habituel pour des services de voix, ...). Par exemple, dans un système tel que l'UMTS, la qualité de service requise est donnée à l'établissement de l'appel en termes de BER cible ou de BLER cible.

Cet algorithme permet ainsi de changer le SIR cible sur la base d'un certain indicateur de qualité QI1 qui est différent de Q12. En effet, QI2 est choisi comme l'indicateur de qualité correspondant à la qualité de service cible, donnée à l'établissement de l'appel, et cet indicateur peut ne pas être très approprié. Par exemple, le BLER n'est pas un très bon indicateur de qualité pour un faible $BLER_{target}$ puisqu'il est assez difficile à estimer. Dans ce cas, on choisit pour l'indicateur QI1 un indicateur plus précis, par exemple le BER brut, ou plus généralement un indicateur de qualité de transmission, plutôt qu'un indicateur de qualité de service (tel que notamment BLER ou BER). Ceci permet d'améliorer les performances de l'algorithme de boucle externe et donc d'améliorer la capacité du réseau.

A titre d'exemple, dans le cas où QI1 est le BER brut (ou « raw BER » en anglais) et QI2 est le BLER, on obtient ainsi un algorithme basé sur deux boucles externes:

- une première boucle externe 1 qui fixe le SIR cible en comparant le BER brut au BER brut cible (si le BER brut est plus grand que le BER brut cible, le SIR cible est augmenté, sinon il est diminué),
- une deuxième boucle externe 2 qui fixe le BER brut cible en comparant le BLER au BLER cible (si le BLER est plus grand que le BLER cible, le BER brut cible est diminué, sinon il est augmenté).

Ceci permet de changer le SIR cible sur la base du BER brut qui est plus facile à estimer que le BLER, mais d'utiliser encore le BLER afin de vérifier que la qualité de service (exprimée en termes de BLER cible) est atteinte.

Par exemple, l'algorithme peut s'écrire de la manière suivante:

- Si ($raw\_BER < raw\_BER_{target}$), le SIR cible est diminué de $\delta 1_{down}$. Sinon, le SIR cible est augmenté de $\delta 1_{up}$.
- Si ($BLER < BLER_{target}$), $raw\_BER_{target}$ est augmenté de $\delta 2_{up}$. Sinon, $raw\_BER_{target}$ est diminué de $\delta 2_{down}$. avec $\delta 1_{up}$, $\delta 1_{down}$, $\delta 2_{up}$ et $\delta 2_{down}$ positifs

Un moyennage sur une certaine période de temps est habituellement effectué de façon à avoir une estimation précise d'un indicateur de qualité. Dans un tel algorithme les périodes de moyennage peuvent être différentes pour QI1 et Q12. Par exemple, lorsque QI2 est le BLER, la période de moyennage peut être choisie égale à un nombre entier de TTIs (suffisamment grand pour avoir une estimation précise du BLER). En outre, dans un tel algorithme, la période d'exécution d'une boucle peut être différente de la période de moyennage. Par exemple, le BLER estimé peut être calculé sur 100*TTI mais la boucle peut être exécutée à chaque TTI, tous les deux TTIs, ...(dans ce cas, une fenêtre glissante peut être utilisée pour le moyennage).

Suivant un des aspects de l'invention, dans l'algorithme précédent, l'algorithme de deuxième boucle externe est avantageusement remplacé par un algorithme tel que le suivant:

- à chaque erreur détectée, $QI1_{target}$ est diminué de $\delta 2_{down}$. Sinon, $QI1_{target}$ est augmenté de $\delta 2_{up}$.

En d'autres termes, ou plus généralement, le deuxième indicateur de qualité indiquant un taux d'erreur, ladite valeur cible de première boucle externe est ajustée à chaque erreur détectée.

Ceci permet essentiellement de conserver les avantages de l'algorithme « en dents de scie » tels que notamment une meilleure réactivité en présence de changements rapides des conditions de transmission, et une complexité moindre. En d'autres termes, contrairement aux documents antérieurs cités précédemment, la présente invention permet notamment, non seulement d'éviter les inconvénients de l'algorithme « en dents de scie », mais aussi d'en conserver les avantages.

Une erreur détectée correspond à un bloc détecté erroné lorsque l'indicateur de qualité QI2 est le BLER, à un bit d'information détecté erroné lorsque QI2 est le BER, à un bit brut détecté erroné lorsque QI2 est le BER brut, ...etc. Les erreurs peuvent être détectées de n'importe quelle manière habituelle : par exemple, des blocs erronés sont habituellement détectés en utilisant un code CRC associé à chaque bloc.

Par ailleurs , afin d'atteindre la qualité de service requise $QI2_{target}$, $\delta 2_{up}$ et $\delta 2_{down}$ sont de préférence déterminés de manière à ce que, en moyenne, le deuxième indicateur de qualité QI2 atteigne la deuxième valeur cible de boucle externe $QI2_{target}$. Ces paramètres peuvent ainsi vérifier une relation du type:

$$\delta 2_{down} * QI2_{target} = \delta 2_{up} * (1 - QI2_{target})$$

A titre d'exemple, dans le cas où QI1 est le BER brut et QI2 est le BLER, l'algorithme devient:

- Si (raw_BER < raw_BER$_{target}$), le SIR cible est diminué de $\delta 1_{down}$. Sinon, le SIR cible est augmenté de $\delta 1_{up}$.
- Si le bloc reçu est détecté erroné, raw_BER$_{target}$ est diminué de $\delta 2_{down}$. Sinon, raw_BER$_{target}$ est augmenté de $\delta 2_{up}$
  avec de préférence :

$$\delta 2_{down} * BLER_{target} = \delta 2_{up} * (1 - BLER_{target}).$$

On notera que dans un système tel que l'UMTS, les blocs correspondent à des blocs de transport, obtenus pour un ou plusieurs canaux de transport pouvant être transportés simultanément sur une même connexion. Dans le cas général où il y a plusieurs canaux de transport, l'algorithme peut alors s'appliquer à un ou plusieurs canaux de transport. Dans le cas où il s'applique à plusieurs canaux de transport, les indicateurs de qualité correspondants peuvent alors être moyennés sur l'ensemble des canaux de transport. Dans le cas où il s'applique à un seul canal de transport, on choisit de préférence le canal de transport qui nécessite une puissance d'émission la plus élevée pour atteindre sa qualité de service (de manière à garantir que si la qualité de service est atteinte pour ce canal de transport, alors elle est aussi atteinte pour les autres canaux de transport).

On notera en outre que dans un système tel que l'UMTS, plusieurs types de BER peuvent être utilisés, tels que "Transport Channel BER" et "Physical Channel BER", comme spécifié dans la spécification 3GPP TS 25.215, par exemple pour le cas où l'algorithme est implémenté dans le RNC ("Radio Network Controller").

Par ailleurs, suivant un autre aspect de la présente invention, l'algorithme de deuxième boucle externe est avantageusement remplacé par un algorithme tel que le suivant:

- si $|QI1-QI1_{target}| < \eta$ :

  • si (Q12 < QI2$_{target}$), QI1$_{target}$ est augmenté de $\delta 2_{up}$.
  • Sinon, il est diminué de $\delta 2_{down}$.

- Sinon aucune action n'est effectuée.
  $\eta > 0$ est un paramètre de cet algorithme.

D'une manière générale, l'idée est de ne changer la valeur cible de première boucle externe (QI1$_{target}$) que lorsque cette première boucle externe a déjà convergé (c'est-à-dire lorsque QI1 est suffisamment proche de QI1$_{target}$). Ceci permet de rendre l'algorithme beaucoup plus stable. Sinon, il y aurait un risque que QI1$_{target}$ et donc aussi SIR$_{target}$ soient augmentés sans pouvoir être atteints, et par conséquent que la puissance d'émission atteigne des valeurs inutilement élevées, d'où un gaspillage de puissance d'émission et une dégradation des performances d'ensemble du système.

Comme illustré sur la figure 2, la première boucle externe comporte alors, par rapport à celle de la figure 1, des moyens additionnels notés 1' permettant de n'ajuster la valeur cible de première boucle externe que si cette première boucle a déjà convergé.

On notera que cette idée s'applique quel que soit le mode de réalisation de la première et de la deuxième boucle externe et quel que soit l'indicateur de qualité choisi pour chacune de ces boucles. Notamment, cette idée s'applique à l'un ou l'autre des algorithmes de deuxième boucle externe décrits précédemment.

Par ailleurs, un autre aspect de la présente invention concerne l'initialisation, ou comment déterminer de meilleures valeurs initiales pour la valeur cible de boucle interne SIR cible et la valeur cible de première boucle externe QI1$_{target}$ (la valeur cible de deuxième boucle externe étant quant à elle fixée en fonction de la qualité de service requise).

Un problème se pose en effet à l'initialisation (ou à l'établissement de l'appel), qui est que si ces valeurs ne sont pas bien choisies, cela peut avoir pour conséquence d'augmenter le temps de convergence initial, nécessaire pour atteindre des valeurs dites idéales pour ces valeurs cible (c'est-à-dire des valeurs permettant d'atteindre la qualité de service avec le minimum de puissance d'émission).

Par exemple, si QI1$_{target}$ est initialisé à une valeur beaucoup plus grande que sa valeur idéale, le SIR cible va dépasser de manière significative sa valeur idéale et le temps de convergence des valeurs QI1$_{target}$ et SIR cible vers leur valeur idéale va augmenter de manière significative. Pendant ce temps, beaucoup de puissance d'émission sera gaspillée, et la capacité du système sera dégradée de façon significative.

Pour éviter de tels inconvénients, la présente invention propose plusieurs solutions.

Suivant une première solution, au début de l'appel, la boucle externe de contrôle de puissance n'est pas activée pendant une certaine période. Pendant cette période, la qualité est mesurée au moyen de l'indicateur de qualité QI1 et après cette période, la boucle externe de contrôle de puissance est activée avec QI1$_{target}$ égal à la valeur QI1 ainsi mesurée. La valeur SIR cible initiale est fixée aussi proche que possible de la valeur SIR cible idéale, par exemple en utilisant des résultats de mesures précédentes ou des résultats de simulation. Elle est de préférence fixée un peu au-dessus de la valeur cible idéale estimée, car la convergence est plus rapide lorsque la valeur SIR cible initiale est plus grande que la valeur SIR cible idéale.

En d'autres termes, suivant cette première solution, la valeur initiale de valeur cible de première boucle externe est obtenue par des mesures effectuées pour une valeur prédéterminée de la valeur cible de boucle interne. Notamment, ladite valeur prédéterminée de valeur cible de boucle interne est choisie la plus proche possible d'une valeur idéale.

Suivant une deuxième solution, au début de l'appel, la valeur cible de première boucle externe $QI1_{target}$ est fixée à une valeur aussi proche que possible de sa valeur idéale, éventuellement estimée à partir de résultats de mesures ou de simulations précédents, et on applique par ailleurs l'idée précédente selon laquelle on ne change la valeur cible de première boucle externe ($QI1_{target}$) que lorsque la première boucle externe a déjà convergé, de façon à ce que $QI1_{target}$ ne soit pas modifié tant que QI1 n'est pas suffisamment proche de $QI1_{target}$.

En d'autres termes, suivant cette deuxième solution, la valeur initiale de valeur cible de première boucle externe est choisie la plus proche possible d'une valeur idéale, et la valeur cible de première boucle externe n'est ajustée que si ladite première boucle externe a déjà convergé.

D'autres solutions seraient encore possibles, l'idée commune à ces différentes solutions étant que les valeurs initiales de SIR cible et $QI1_{target}$ correspondent approximativement à une même puissance d'émission, c'est-à-dire que ces valeurs peuvent être atteintes approximativement simultanément pour une même puissance d'émission (par « approximativement » on entend qu'il est peu probable en pratique qu'on arrive à initialiser SIR cible et $QI1_{target}$ avec des valeurs qui soient atteintes exactement en même temps, du fait des imprécisions d'estimation de ces deux valeurs). Ceci assure une bonne stabilité de l'algorithme pendant la phase d'initialisation, et évite qu'une de ces deux valeurs ne s'écarte rapidement de sa valeur idéale pendant cette phase d'initialisation.

On notera aussi que cette idée s'applique quel que soit le mode de réalisation de la première et de la deuxième boucle externe et quel que soit l'indicateur de qualité choisi pour chacune de ces boucles.

La solution suivant l'invention peut être utilisée dans tout système de radiocommunications mobiles, notamment dans un système CDMA tel que l'UMTS.

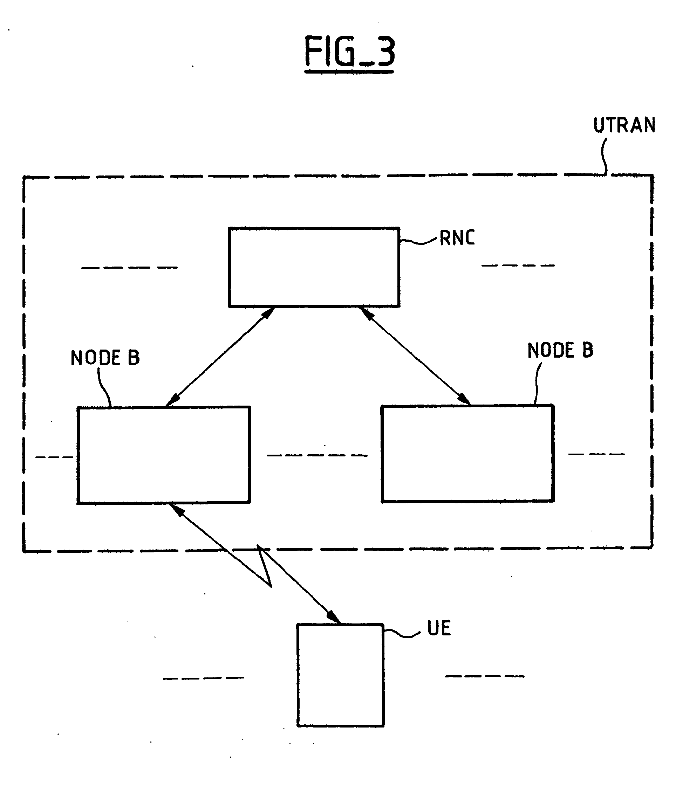

D'une manière générale, un système de radiocommunications mobiles comporte, comme rappelé sur la figure 3, les différentes entités suivantes: des stations mobiles (appelées aussi équipements utilisateurs, ou UE, pour "User Equipment" dans le système UMTS), des stations de base (appelées aussi "Node B" dans l'UMTS), et des contrôleurs de stations de base (appelés aussi RNC, pour "Radio Network Controller" dans l'UMTS). L'ensemble formé par les « Node B » et les RNC est aussi appelé UTRAN, pour "UMTS Terrestrial Radio Access Network".

Généralement la boucle externe de contrôle de puissance est plutôt mise en oeuvre dans le récepteur (UE pour le sens descendant par exemple), car il est plus logique d'effectuer l'estimation de qualité nécessaire à cette boucle externe dans le récepteur. En outre, dans un système tel que l'UMTS, le RNC est en charge du contrôle du réseau et des actions effectuées par l'UE, alors que le Node B est principalement un émetteur-récepteur. Ainsi, la boucle externe de contrôle de puissance dans le sens montant est généralement mise en oeuvre dans le RNC. La boucle externe de contrôle de puissance dans le sens descendant est mise en oeuvre dans l'UE. La boucle interne de contrôle de puissance est réalisée en partie dans l'UE, et en partie dans le le Node B; par exemple, dans le sens montant, le Node B compare le SIR estimé au SIR cible et envoie une commande de contrôle de puissance à l'UE, et l'UE modifie sa puissance transmise en fonction des commandes de contrôle de puissance envoyées par le Node B.

La présente invention a également pour objet :

- une station mobile (notamment UE, pour « User Equipment » dans un système tel que l'UMTS),
- un équipement de réseau de radiocommunications mobiles(notamment un contrôleur de stations de base tel que RNC(« Radio Network Controller ») dans un système tel que l'UMTS) ou encore une station de base telle que Node B dans un système tel que l'UMTS)
- un réseau de radiocommunications mobiles,
- un système de radiocommunications mobiles,
- tous comportant des moyens pour mettre en oeuvre les divers procédés ci-dessus, individuellement ou en combinaison.

Ces différents moyens peuvent opérer suivant l'un ou l'autre des procédés décrits précédemment; leur réalisation particulière ne présentant pas de difficulté particulière pour l'homme du métier, de tels moyens ne nécessitent pas d'être décrits ici de manière plus détaillée que par leur fonction.

**Revendications**

1. Procédé d'ajustement de valeur cible de boucle interne de contrôle de puissance dans un système de radiocommunications mobiles, procédé dans lequel:

   - ladite valeur cible de boucle interne est ajustée par une boule de contrôle dite première boucle externe (1), opérant sur la base d'un indicateur de qualité dit premier indicateur de qualité (QI1) et d'une valeur cible ($Q11_{target}$) pour ce premier indicateur de qualité dite valeur cible de première boule externe,
   - ladite valeur cible de première boucle externe est ajustée par une boucle de contrôle dite deuxième boucle externe (2), opérant sur la base d'un indicateur de qualité (QI2) dit deuxième indicateur de qualité et d'une valeur cible (QI2$_{target}$) pour ce deuxième indicateur de qualité, dite valeur cible de deuxième boucle externe,

procédé **caractérisé en ce que** :

- ledit deuxième indicateur de qualité indique un taux d'erreur, et ladite valeur cible de première boucle externe est ajustée à chaque erreur détectée,
la deuxième boucle externe ajuste la valeur cible de première boucle externe selon une première ou une deuxième valeur selon qu'une erreur est ou non détectée.
- lesdites première et deuxième valeurs et. la valeur cible de deuxième boucle externe sont reliées entre elles de manière à ce que, en moyenne, le deuxième indicateur de qualité atteigne la valeur cible de deuxième boucle externe.

2. Procédé selon la revendication 1, dans lequel, les informations transmises dans ledit système étant structurées en blocs sur la base desquels est obtenu ledit deuxième indicateur de qualité, ladite valeur cible de première boucle externe est ajustée bloc par bloc.

3. Procédé selon l'une des revendications 1 à 2, dans lequel ledit premier indicateur de qualité est un indicateur de qualité de transmission.

4. Procédé selon la revendication 3, dans lequel ledit premier indicateur de qualité est le BER brut.

5. procédé selon l'une des revendications 1 à 4, dans lequel ledit deuxième indicateur de qualité est un indicateur de qualité de service

6. Procédé selon la revendication 5, dans lequel ledit deuxième indicateur de qualité est BLER.

7. Procédé selon l'une des revendications 1 à 6, procédé dans lequel:

ladite valeur cible de première boucle externe n'est ajustée que si ladite première boucle externe a déjà convergé.

8. Station mobile, comportant, pour l'ajustement de valeur cible de boucle interne de contrôle de puissance dans un système de radiocommunications mobiles

- des moyens pour ajuster ladite valeur cible de boucle interne par une boucle de contrôle dite première boucle externe, opérant sur la base d'un indicateur de qualité dit premier indicateur de qualité et d'une valeur cible (QI1$_{target}$) pour ce premier indicateur de qualité, dite valeur cible de première boucle externe,
- des moyens pour ajuster ladite valeur cible de première boucle externe par une boucle de contrôle dite deuxième boucle externe, opérant sur la base d'un indicateur de qualité dit deuxième indicateur de qualité et d'une valeur cible (QI2$_{target}$) pour ce deuxième indicateur de qualité dite valeur cible de deuxième boucle externe,

station mobile **caractérisée en ce que** :

- ledit deuxième indicateur de qualité indiquant un taux d'erreur, des moyens pour ajuster ladite valeur cible de première boucle externe à chaque erreur détectée,
la deuxième boucle externe est adaptée pour ajuster la valeur cible de première boucle externe selon une première ou une deuxième valeur selon qu'une erreur est ou non détectée.
- les dites première et deuxième valeurs et la valeur cible de deuxième boucle externe sont reliées entre elles de manière à ce que, en moyenne, le deuxième indicateur de qualité atteigne la valeur cible de deuxième boucle externe.

9. Station mobile selon la revendication 8, dans laquelle, les informations transmises dans ledit système étant structurées en blocs sur la base desquels est obtenu ledit deuxième indicateur de qualité, ladite valeur cible de première boucle externe est ajustée bloc par bloc.

10. Station mobile selon la revendication 9, dans laquelle, lesdites première et deuxième valeurs et la valeur cible de deuxième boucle externe sont reliées entre elles de manière à ce que, en moyenne, le deuxième indicateur de qualité atteigne la valeur cible de deuxième boucle externe.

11. Station mobile selon l'une des revendications 8 à 9, dans laquelle ledit premier indicateur de qualité est un indicateur de qualité de transmission.

12. Station mobile selon la revendication 11, dans laquelle ledit premier indicateur de qualité est le BER brut.

13. Station mobile selon l'une des revendications 8 à 12, dans laquelle ledit deuxième indicateur de qualité est un indicateur de qualité de service.

14. Station mobile selon la revendication 13, dans laquelle ledit deuxième indicateur de qualité est le BLER;

15. Station mobile selon l'une des revendications 8 à 14, comportant :

   - des moyens (1') pour n'ajuster ladite valeur cible de première boucle externe que si ladite première boucle externe a déjà convergé.

16. Equipement de réseau de radiocomniunications mobiles, comportant pour l'ajustement de valeur cible de boucle interne de contrôle de puissance dans un système de radiocommunications mobiles:

   - des moyens pour ajuster ladite valeur cible de boucle interne par une boucle de contrôle dite première boucle externe (1), opérant sur la base d'un indicateur de qualité (QI1) dit premier indicateur de qualité est d'une valeur cible (QI1$_{target}$) pour ce premier indicateur de qualité, dite valeur cible de première boucle externe,
   - des moyens pour ajuster ladite valeur cible de première boucle externe par une boucle de contrôle dite deuxième boucle externe (2), opérant sur la base d'un indicateur de qualité (QI2) dit deuxième indicateur de qualité et d'une valeur cible (QI2$_{target}$) pour ce deuxième indicateur de qualité, dite valeur cible de deuxième boucle externe,

   équipement de réseau **caractérisé en ce que** :

   - ledit deuxième indicateur de qualité indiquant un taux d'erreur, des moyens pour ajuster ladite valeur cible de première boucle externe à chaque erreur détectée,
   la deuxième boucle externe est adaptée pour ajuster la valeur cible de première boucle externe selon une première ou une deuxième valeur selon qu'une erreur est ou non détectée.
   - lesdites première et deuxième valeurs et la valeur cible de deuxième boucle externe sont reliées entre elles, de manière à ce que, en moyenne, le deuxième indicateur de qualité atteigne la valeur cible de deuxième boucle externe.

17. Equipement de réseau selon la revendication 16, dans lequel, les informations transmises dans ledit système étant structurées en blocs sur la base desquels est obtenu ledit deuxième indicateur de qualité, ladite valeur cible de première boucle externe est ajustée bloc par bloc.

18. Equipement de réseau selon la revendication 16, dans lequel, lesdites première et deuxième valeurs et la valeur cible de deuxième boucle externe sont reliées entre elles de manière à ce que, en moyenne, le deuxième indicateur de qualité atteigne la valeur cible de deuxième boucle externe.

19. Equipement de réseau selon l'une des revendications 16 à 18, dans lequel ledit premier indicateur de qualité est un indicateur de qualité de transmission.

20. Equipement de réseau selon la revendication 19, dans lequel ledit premier indicateur de qualité est le BER brut.

21. Equipment de réseau selon l'une des revendications 16 à 20, dans lequel ledit deuxième indicateur de qualité est un indicateur de qualité de service.

22. Equipement de réseau selon la revendication 21, dans lequel ledit deuxième indicateur de qualité est le BLER.

23. Equipement de réseau de radiocommunications mobiles selon l'une des revendications 16 à 22, comportant:

   - des moyens (1') pour n'ajuster ladite valeur cible de première boucle externe que si ladite première boucle externe a déjà convergé.

## Claims

1. A method for adjusting the target value of the power control internal loop in a mobile radio communication system, wherein:

   - said internal loop target value is adjusted by a control loop known as the first external loop (1), operating on the basis of a quality known as the first quality indicator (QI1) and a target value (QI1$_{target}$) for that first quality indicator, known as the first external loop target value,
   - said first external loop target value is adjusted by a control loop known as the second external loop (2), operating on the basis of a quality indicator (Q12) known as the second quality indicator and a target value (QI2$_{target}$) for that second quality indicator, known as the second external loop target value,

   method **characterized in that**:

   - said second quality indicator indicates an error rate, and said first external loop target value is adjusted upon each error being detected,
   - the second external loop adjusts the first external loop target value to a first or second value depending on whether an error is detected or not,
   - said first and second values and the second external loop target value are connected to one another in such a way that, on average, the second quality indicator attains the second external loop target value.

2. A method according to claim 1, wherein the information transmitted in said system being structured into blocks on the basis of which said second quality indicator is obtained, said first outer loop target value is adjusted block by block,

3. A method according to one of claims 1 or 2, wherein said first quality indicator is a transmission quality indicator.

4. A method according to claim 3, wherein said first quality indicator is the raw BER.

5. A method according to one of claims 1 to 4, wherein said second quality indicator is a quality of service indicator.

6. A method according to claim 5, wherein said second quality indicator is the BLER.

7. A method according to one of claims 1 to 6, wherein;

    - said first external loop target value is only adjusted if said first external loop has already converged.

8. A mobile station, comprising, in order to adjust the internal power control loop target value in a mobile radio communication system:

    - means for adjusting said internal loop target value using a control loop known as the first external loop, operating on the basis of a quality indicator known as the first quality indicator and a target value ($QI1_{target}$) for that first quality indicator, known as the first external loop target value,
    - means for adjusting said first external loop target value using a control loop known as the second external loop, operating on the basis of a quality indicator known as a second quality indicator and a target value ($QI2_{target}$) for that second quality indicator, known as the second external loop target value.

mobile station **characterized in that**:

    - said second quality indicator vindicating an error rate, means for adjusting said first external loop target value upon each error being detected,
    - the second external loop is adjusted to add the first external loop target value to a first or second value depending on whether an error is detected or not,
    - said first and second values and the second external loop target value are connected to one another in such a way that, on average, the second quality indicator attains the second external loop target value,

9. A mobile station according to claim 8, wherein the information transmitted in said system being structured into blocks on the basis of which said second quality indicator is obtained, said first outer loop target value is adjusted block by block.

10. A mobile station according to claim 9, wherein said first and second values and the second external loop target value are connected to one another in such a way that, on average, the second quality indicator attains the second external loop target value,

11. A mobile station according to one of claims 8 or 9, wherein said first quality indicator is a transmission quality indicator.

12. A mobile station according to claim 11, wherein said first quality indicator is the raw BER.

13. A mobile station according to one of claims 8 to 12, wherein said second quality indicator is a quality of service indicator.

14. A mobile station according to claim 13, wherein said second quality indicator is the BLER.

15. A mobile station according to one of the claims 8 to 14, comprising:

    - means (1') for adjusting said first external loop target value only if said first external loop has already converged.

16. Mobile radio communication network equipment, comprising, in order to adjust the power control internal loop target values in a mobile radio communication system:

    - means for adjusting said internal loop target values using a control loop known as the first external loop (1), operating on the basis of a quality indicator known as the first quality indicator (QI1) and a target value ($QI1_{target}$) for that first quality indicator, known as the first external loop target value,
    - means for adjusting said first external loop target value using a control loop known as the second external loop, operating on the basis of a quality indicator, known as a second quality indicator and a target value ($QI2_{target}$) for that second quality indicator, known as the second external loop target value,

network equipment **characterized in that**

- said second quality indicator indicating an error rate, means for adjusting said first external loop target values upon each error being detected,
- the second external loop is adjusted to add the first external loop target value to a first or second value depending on whether an error is detected or not,
- said first and second values and the second external loop target values are connected to one another in such a way that, ran average, the second quality indicator attains the second external loop target value.

17. Network equipment according to claim 16, wherein the information transmitted in said system being structured into blocks on the basis of which said second quality indicator is obtained, said first external loop target value is adjusted block by block,

18. Network equipment according to claim 16, wherein said first and second values and the second external loop target value are connected to one another in such a way that, on average, the second quality indicator attains the second external loop target value,

19. Network equipment according to one of claims 16 to 18, wherein said first quality indicator a transmission quality indicator,

20. Network equipment according to claim 19, wherein said first quality indicator is the raw BER.

21. Network equipment according to one of claims 16 to 20, wherein said first quality indicator is a quality of service indicator,

22. Network equipment according to claim 21, wherein said first quality indicator is the BLER,

23. Mobile radio communication network equipment according to one of the claims 16 to 22 comprising:

- means (1') for adjusting said first external loop target value only if said first external loop has already converged.

**Patentansprüche**

1. Verfahren zum Anpassen der Zielgröße der internen Leistungssteuerschleife in einem mobilen Funkkommunikationssystem, wobei:

- Die besagte Zielgröße der internen Schleife anhand einer Kontrollschleife, der sogenannten ersten externen Schleife (1), welche auf der Basis eines Güteindikators, des sogenannten ersten Güteindikators (QI1), und einer Zielgröße (QI1$_{target}$) für diesen ersten Güteindikator, der sogenannten Zielgröße der ersten externen Schleife, arbeitet,
- die besagte Zielgröße der ersten externen Schleife anhand einer Kontrollschleife, der sogenannten zweiten externen Schleife (2), welche auf der Basis eines Güteindikators (QI2), des sogenannten zweiten Güteindikators, und einer Zielgröße (QI2$_{target}$) für diesen zweiten Güteindikator, der sogenannten Zieigroße der zweiten externen Schleife, arbeitet,

wobei das Verfahren **dadurch gekennzeichnet, ist, dass** :

- der besagte zweite Güteindikator eine Fehlerquote angibt, und die besagte Zielgröße der ersten externen Schleife bei jedem erkannten Fehler angepasst wird, wobei die zweite externe Schleife die Zielgröße der ersten externen Schleife gemäß einem ersten und einem zweiten Wert, abhängig davon, ob ein Fehler erkannt wird oder nicht, anpasst.
- der besagte erste und der besagte zweite Wert und die Zielgröße der zweiten externen Schleife miteinander verbunden sind, so dass im Durchschnitt der zweite Güteindikator die Zielgröße der zweiten externen Schleife erreicht.

2. Verfahren nach Anspruch 1, wobei die in dem besagten System übertragenen Informationen in Blökken strukturiert sind, auf deren Basis der besagte zweite Güteindikator erhalten wird, wobei die besagte Zielgröße der ersten externen Schleife blockweise angepasst wird,

3. Verfahren nach einem der Ansprüche 1 bis 2, wobei der besagte erste Güteindikator ein Übertragungsgüte-Indikator ist.

4. Verfahren nach Anspruch 3, wobei der besagte erste Güteindikator eine Brutto-BER ist.

5. Verfahren nach einem der Ansprüche 1 bis 4, wobei der besagte zweite Güteindikator ein Dienstgüte-Indikator ist.

6. Verfahren nach Anspruch 5, wobei der besagte zweite Güteindikator die BLER ist.

7. Verfahren nach einem der Ansprüche 1 bis 6, wobei,

- Die besagte Zielgröße der ersten externen Schleife nur angepasst wird, wenn die besagte erste externe Schleife schon konvegiert hat,

8. Möbilstation, welche für das Anpassen der Zielgröße der boucle interne de contrôle de puissance in einem mobilen Funkkommunikationssystem umfasst:

- mittel zum Anpassen der besagten Zielgröße der internen Schleife anhand einer Kontrollschleife, der sogenannten ersten externen Schleife, welche auf der Basis eines Güteindikators, des sogenannten ersten Güteindikators, und einer Zielgröße (QI1$_{target}$) für diesen Güteindikator, der sogenannten Zielgröße der ersten externen Schleife, arbeitet,
- Mittel zum Anpassen der besagten Zielgröße der ersten internen Schleife anhand einer Kontrollschleife, der sogenannten zweiten externen Schleife, welche auf der Basis eines Güteindikator, des sogenannten zweiten Güteindikators, und einer Zielgröße (QI2$_{target}$) für diesen zweiten Güteindikator, der sogenannten Zielgröße der zweiten externen Schleife, arbeitet,

wobei die Mobilstation **dadurch gekennzeichnet ist, dass** :

- der besagte zweite Güteindikator eine Fehlerquote der Mittel zum Anpassen der besagten Zielgröße der ersten externen Schleife bei jedem erkannten Fehler angibt, wobei die zweite externe Schleife ausgelegt ist, um die Zielgröße der ersten externen Schleife gemäß einem ersten oder einem zweiten Wert, je nach dem, ob der Fehler erkannt wird oder nicht, anzupassen,
- der besagte erste und der besagte zweite Wert und die Zielgröße der zweiten externen Schleife miteinander verbunden sind, so dass im Durchschnitt der zweite Güteindikator die Zielgröße der zweiten externen Schleife erreicht.

9. Mobilstation nach Anspruch 8, wobei die in dem besagten System übertragenen Informationen in Blökken strukturiert sind, auf deren Basis der besagte zweite Güteindikator erhalten wird, wobei die besagte Zielgröße der ersten externen Schleife blockweise angepasst wird.

10. Mobilstation nach Anspruch 9, wobei der besagte erste und der besagte zweite Wert und die Zielgröße der zweiten externen Schleife miteinander verbunden sind, so dass, im Durchschnitt, der zweite Güteindikator die Zielgröße der zweiten externen Schleife erreicht.

11. Mobilstation nach einem der Ansprüche 8 bis 9, wobei der besagte erste Güteindikator ein Übertragungsgüte-Indikator ist.

12. Mobilstation nach Anspruch 11, wobei der besagte erste Güteindikator eine Brutto-BER ist.

13. Mobilstation nach einem der Ansprüche 8 bis 12, wobei der besagte zweite Güteindikator ein Dienstgüte-Indikator ist.

14. Verfahren nach Anspruch 13, wobei der besagte zweite Güteindikator die BLER ist.

15. Mobilstation nach einem der Ansprüche 8 bis 14, umfassend

- Mittel (1'), um die besagten Zielgröße der ersten externen Schleife nur anzupassen, wenn die besagte erste externe Schleife, schon konvergiert hat.

16. Vorrichtung für ein Mobilfunkkommunikationsnetzwerk, welche für das Anpassen der Zielgröße der internen Leistungssteuerschleife in einem mobilen Funkkommunikationssystem umfasst:

- Mittel zum Anpassen der besagten Zielgröße der internen Schleife anhand einer Kontrollschleife, der sogenannten ersten externen Schleife (1), welche auf der Basis eines Güteindikators (QI1), des sogenannten ersten Güteindikators, und einer Zielgröße (QI1$_{target}$) für diesen ersten Güteindikator, der sogenannten Zielgröße der ersten externen Schleife, arbeitet,
- Mittel zum Anpassen der besagten Zielgröße der ersten internen Schleife anhand einer Kontronschleife, der sogenannten zweiten externen Schleife (2), welche auf der Basis eines Güteindikators (QI2), des sogenannten zweiten Güteindikators, und einer Zielgröße (QI2$_{target}$) für diesen zweiten Güteindikator, der sogenannten Zielgröße der zweiten externen Schleife, arbeitet,

wobei die Mobilfunkktmmunikations netzwerk-Vorrichtung **dadurch gekennzeichnet ist, dass**,

- der besagte zweite Güteindikator eine Fehlerquote angibt, Mittel zum Anpassen der besagten Zielgröße der ersten externen Schleife bei jedem erkannten Fehler, die zweite externe Schleife ausgelegt ist, um die Zielgröße der ersten externen Schleife gemäß einem ersten oder einem zweiten Wert, je nach dem, ob der Fehler erkannt wird oder nicht, anzupassen,
- der besagte erste und der besagte zweite Wert und die Zielgröße der zweiten externen Schleife miteinander verbunden sind, so dass, im Durchschnitt der zweite Güteindikator die Zielgröße der zweiten externen Schleife erreicht

**17.** Netzwerkvorrichtung nach Anspruch 16, wobei die in dem besagten System übertragenen Informationen in Blöcken strukturiert sind, auf deren Basis der besagte zweite Güteindikator erhalten wird, wobei die besagte Zielgröße der ersten externen Schleife blockweise angepasst wird.

**18.** Metzwerkvorrichtung nach Anspruch 16, wobei der besagte erste und der besagte zweite Wert und die Zielgröße der zweiten externen Schleife miteinander verbunden sind, so dass im Durchschnitt der zweite Güteindikator die Zielgröße der zweiten externen Schleife erreicht.

**19.** Netzwerkvorrichtung nach einem der Ansprüche 16 bis 18, wobei der besagte erste Güteindikator ein Übertragungsgüte-Indikator ist.

**20.** Netzwerkvorrnchtung nach Anspruch 19, wobei der besagte erste Güteindikator eine Brutto-BER ist.

**21.** Netzwerkvorrichtung nach einem der Ansprüche 16 bits 20, wobei der besagte zweite Güteindikator ein Dienstgüte-Indikator ist.

**22.** Netzwerkvorrichtung nach Anspruch 21, wobei der besagte zweite Güteindikator die BLER ist.

**23.** Vorrichtung für ein Mobilfunkkommunikationsnetzwerk nach einem der Ansprüche 16 bis 22, umfassend

    - Mittel (1') um die besagten Zielgröße, der ersten externen Schleife nur anzupassen, wenn die besagte erste externe Schleife schon konvergiert hat.

# FIG_1

# FIG_2

# FIG_3

UTRAN

RNC

NODE B

NODE B

UE

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9905808 A
- DE 19930747
- WO 0101600 A
- WO 0120808 A